# EUROPEAN PATENT SPECIFICATION

(11) **EP 4 588 395 B1**
(45) Date of publication and mention of the grant of the patent: **28.10.2026**
(21) Application number: 23877502.7
(22) Date of filing: 08.09.2023
(51) Int. Cl.: A45C 11/00, H04B 1/3888, A45C 13/00, H05K 5/03, A45C 15/00, H04M 1/04, H04M 1/02, G06F 1/16

(54) **CASE INCLUDING STRUCTURE FOR SUPPORTING ELECTRONIC DEVICE**
GEHÄUSE MIT STRUKTUR ZUM TRAGEN EINER ELEKTRONISCHEN VORRICHTUNG
BOÎTIER CONTENANT UNE STRUCTURE CONÇUE POUR SUPPORTER UN DISPOSITIF ÉLECTRONIQUE

(30) Priority: 14.10.2022 KR 20220132399; 03.11.2022 KR 20220145023
(43) Date of publication of application: 23.07.2025
(73) Proprietor: Samsung Electronics Co., Ltd., Suwon-si, Gyeonggi-do 16677 (KR)
(72) Inventor: JEONG, Jinkyu, Suwon-si Gyeonggi-do 16677 (KR)
(74) Representative: Gulde & Partner
(86) International application number: PCT/KR2023/013539
(87) International publication number: WO 2024/080572

(56) References cited:
- WO-A1-2018/089926
- JP-A- H07 275 025
- KR-A- 20210 004 755
- KR-A- 20210 008 458
- KR-A- 20210 008 458
- KR-B1- 102 218 585
- KR-U- 20140 004 961

## Description

### [Technical Field]

The present disclosure relates to a case including a structure for supporting an electronic device.

### [Background Art]

As an electronic device is carried by a user, the electronic device may be exposed to various environments. A case may protect the electronic device exposed to various environments, by being detachably coupled to the electronic device. For example, the case may protect the electronic device from an impact transmitted to the electronic device from the outside of the electronic device. In order to meet a demand of the user, the case may have various functions in addition to a function for protecting the electronic device.

Conventional devices are known from KR 2021 0008458 A and WO 2018/089926 A1.

### [Disclosure]

### [Technical Solution]

The invention is set out in the appended set of claims.

A case detachably coupled to an electronic device according to an embodiment may comprise a first base coupled to a portion of the electronic device. According to an embodiment, the case may comprise a second base, including a first surface facing another portion of the electronic device and a second surface opposite to the first surface, and coupled to the first base to be rotatable relative to the first base. According to an embodiment, the case may comprise a first support, rotatably coupled to the second base, and movable to be parallel to the second surface by rotation in a first rotation direction or movable to be inclined with respect to the second surface by rotation in a second rotation direction opposite to the first rotation direction. According to an embodiment, the case may comprise a second support coupled to the second base to be independently rotatable relative to the first support, and movable to be parallel to the second surface by rotation in the second rotation direction, or movable to support a side surface of the electronic device disposed on the first surface by rotation in the first rotation direction.

A case detachably coupled to an electronic device according to an embodiment may comprise a first base coupled to a portion of the electronic device. According to an embodiment, the case may comprise a second base, including a first surface facing another portion of the electronic device, a second surface opposite to the first surface, and a through-hole extending from the first surface to the second surface, and coupled to the first base to be rotatable relative to the first base. According to an embodiment, the case may comprise a first support, rotatably coupled to the second base, and movable to be parallel to the second surface by rotation in a first rotation direction or movable to be inclined with respect to the second surface by rotation in a second rotation direction opposite to the first rotation direction. According to an embodiment, the case may comprise a second support, coupled to the second base to be independently rotatable relative to the first support, and movable to be received within the through-hole by rotation in the second rotation direction or movable to support a side surface of the electronic device disposed outside the through-hole by rotation in the first rotation direction.

### [Description of the Drawings]

FIG. 1A illustrates a state in which an exemplary case according to an embodiment is coupled with an electronic device in an unfolded state.
FIG. 1B illustrates a state in which an exemplary case according to an embodiment is coupled with an electronic device in a folded state.
FIG. 2A is a top plan view of an exemplary case according to an embodiment.
FIG. 2B is a perspective view of an exemplary case according to an embodiment.
FIG. 2C is a side view of an exemplary case according to an embodiment.
FIG. 3A illustrates an exemplary first support according to an embodiment within a first position.
FIG. 3B illustrates an exemplary first support according to an embodiment within a second position.
FIG. 4A illustrates an exemplary second support according to an embodiment within a third position.
FIG. 4B illustrates an exemplary second support according to an embodiment within a fourth position.

### [Mode for Invention]

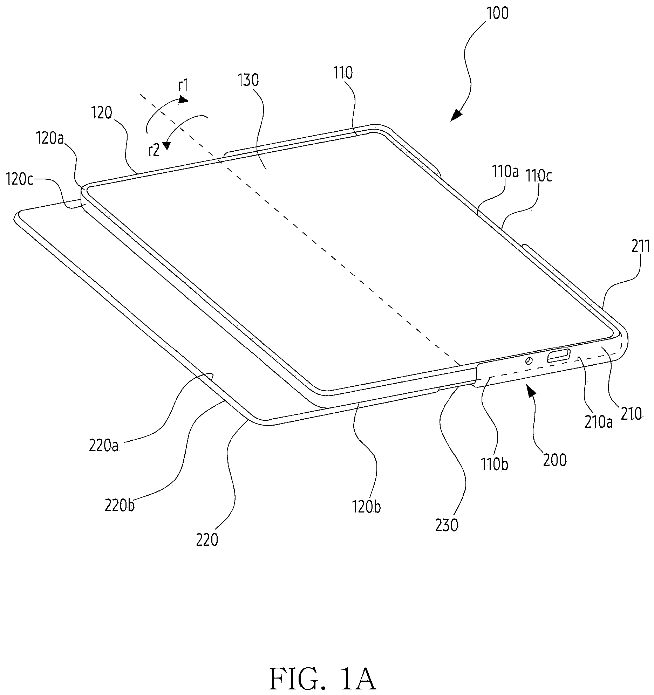

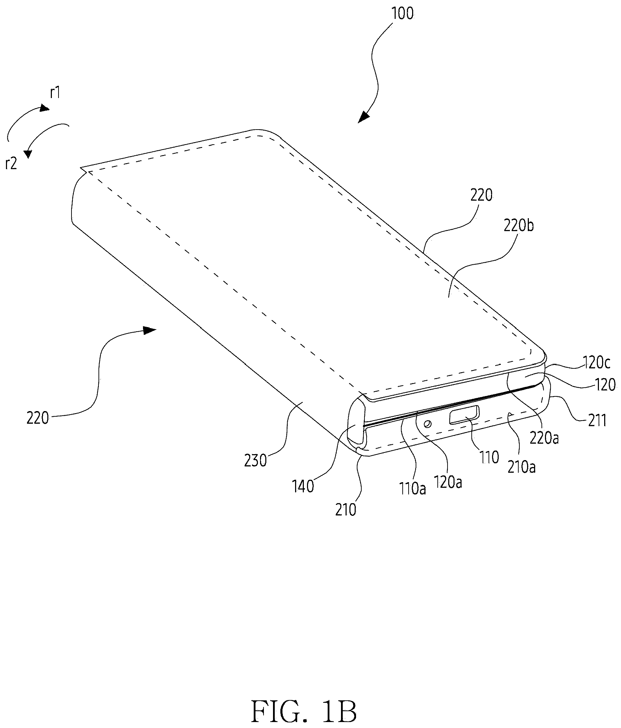

FIG. 1A illustrates a state in which an exemplary case according to an embodiment is coupled with an electronic device in an unfolded state, and FIG. 1B illustrates a state in which an exemplary case according to an embodiment is coupled with an electronic device in a folded state.

Referring to FIG. 1A and FIG. 1B, an electronic device 100 according to an embodiment may include a first housing 110, a second housing 120, a display 130, and/or a hinge structure 140.

The first housing 110 may define a portion of an outer surface of the electronic device 100. The first housing 110 may provide a space in which a portion of components of the electronic device 100 may be disposed. The first housing 110 may support the portion of the components of the electronic device 100. For example, a first front surface 110a of the first housing 110 may support a portion of the display 130. A first rear surface 110b of the first housing 110 may be opposite to the first front surface 110a. For example, a direction in which the first rear surface 110b faces may be opposite to a direction in which the first front surface 110a faces. The first rear surface 110b may be spaced apart from the first front surface 110a. A first side surface 110c of the first housing 110 may connect the first front surface 110a and the first rear surface 110b. For example, the first side surface 110c may extend from the first front surface 110a to the first rear surface 110b. According to an embodiment, the first side surface 110c may surround the first front surface 110a and the first rear surface 110b. For example, the first side surface 110c may surround a periphery of the first front surface 110a and a periphery of the first rear surface 110b. According to an embodiment, the first side surface 110c may be perpendicular to the first front surface 110a and/or the first rear surface 110b, but is not limited thereto. For example, the first side surface 110c may be bent with a curvature between the first front surface 110a and the first rear surface 110b.

The second housing 120 may define another portion of the outer surface of the electronic device 100. The second housing 120 may provide a space in which another portion of the components of the electronic device 100 may be disposed. The second housing 120 may support the other portion of the components of the electronic device 100. For example, a second front surface 120a of the second housing 120 may support another portion of the display 130. A second rear surface 120b of the second housing 120 may be opposite to the second front surface 120a. For example, a direction in which the second rear surface 120b faces may be opposite to a direction in which the second front surface 120a faces. The second rear surface 120b may be spaced apart from the second front surface 120a. A second side surface 120c of the second housing 120 may connect the second front surface 120a and the second rear surface 120b. For example, the second side surface 120c may extend from the second front surface 120a to the second rear surface 120b. According to an embodiment, the second side surface 120c may surround the second front surface 120a and the second rear surface 120b. For example, the second side surface 120c may surround a periphery of the second front surface 120a and a periphery of the second rear surface 120b. According to an embodiment, the second side surface 120c may be perpendicular to the second front surface 120a and/or the second rear surface 120b, but is not limited thereto. For example, the second side surface 120c may be bent with a curvature between the second front surface 120a and the second rear surface 120b.

According to an embodiment, the second housing 120 may be movable with respect to the first housing 110. For example, the second housing 120 may be coupled to the first housing 110 to be rotatable with respect to the first housing 110. For example, the second housing 120 may be rotatably coupled with respect to the first housing 110 through the hinge structure 140.

The display 130 may be configured to provide visual information. For example, the display 130 may emit light to provide the visual information along the direction in which the first front surface 110a faces and the direction in which the second front surface 120a faces. According to an embodiment, the display 130 may be coupled to the first housing 110 and the second housing 120. For example, the display 130 may be disposed on the first front surface 110a of the first housing 110 and the second front surface 120a of the second housing 120. The display 130 may extend from the first housing 110 to the second housing 120 across the hinge structure 140. The display 130 may be deformable by a movement of the second housing 120 with respect to the first housing 110. For example, the display 130 may be foldable by the movement of the second housing 120 with respect to the first housing 110.

The hinge structure 140 may rotatably couple the first housing 110 and the second housing 120. For example, the first housing 110 may be rotatable with respect to the second housing 120 through the hinge structure 140. For example, the second housing 120 may be rotatable with respect to the first housing 110 through the hinge structure 140. According to an embodiment, a state of the electronic device 100 may be changed by the movement of the second housing 120 with respect to the first housing 110. The state of the electronic device 100 may include an unfolded state and/or a folded state. In the unfolded state of the electronic device 100, the direction in which the first front surface 110a of the first housing 110 faces and the direction in which the second front surface 120a of the second housing 120 faces may be the same. In the unfolded state of the electronic device 100, the display 130 may be unfolded. In the unfolded state of the electronic device 100, a size of visually recognizable extent of the display 130 from the outside of the electronic device 100 may be a maximum. As the second housing 120 rotates with respect to the first housing 110, the state of the electronic device 100 may be changed from the unfolded state to the folded state. In the folded state of the electronic device 100, the first front surface 110a of the first housing 110 and the second front surface 120a of the second housing 120 may face each other. In the folded state of the electronic device 100, the direction in which the first front surface 110a of the first housing 110 faces may be opposite to the direction in which the second front surface 120a of the second housing 120 faces. In the folded state of the electronic device 100, the display 130 may be folded. In the folded state of the electronic device 100, the size of the visually recognizable extent of the display 130 from the outside of the electronic device 100 may be a minimum.

Meanwhile, it is described that the state of the electronic device 100 includes the folded state and the unfolded state, but is not limited thereto. For example, the state of the electronic device 100 may include an intermediate state in which the direction in which the first front surface 110a of the first housing 110 faces is inclined with respect to the direction in which the second front surface 120a of the second housing 120 faces. For example, the intermediate state of the electronic device 100 may be referred to as a flex mode.

According to an embodiment, as the state of the electronic device 100 is changed, at least a portion of the hinge structure 140 may be visually recognizable from the outside. For example, in the unfolded state of the electronic device 100, the hinge structure 140 may be covered by the first housing 110 and the second housing 120. For example, in the unfolded state of the electronic device 100, the hinge structure 140 may be disposed inside the first housing 110 and the second housing 120. For example, in the unfolded state of the electronic device 100, the hinge structure 140 may not be visible from the outside of the electronic device 100. For example, in the folded state of the electronic device 100, the at least a portion of the hinge structure 140 may be exposed outside the first housing 110 and the second housing 120.

A case 200 may protect the electronic device 100. For example, the case 200 may protect the electronic device 100 by surrounding at least a portion of the outer surface of the electronic device 100. For example, the case 200 may reduce damage to the electronic device 100 due to an impact transmitted from the outside. The case 200 may be detachably coupled to the electronic device 100. According to an embodiment, the case 200 may include a first base 210, a second base 220, and/or a connecting plate 230.

The first base 210 may protect a portion of the electronic device 100. The first base 210 may be coupled to the portion of the electronic device 100. For example, the first base 210 may be detachably coupled to the first housing 110. According to an embodiment, the first base 210 may have a shape corresponding to a shape of the portion of the electronic device 100. For example, the first base 210 may have a shape corresponding to an outer surface of the first housing 110. The first base 210 may surround the first side surface 110c of the first housing 110 by having the shape corresponding to the outer surface of the first housing 110. However, it is not limited thereto, and the first base 210 may be coupled to the portion of the electronic device 100 by various methods. For example, the first base 210 may be coupled to the portion of the electronic device 100 through an adhesive material. For example, the first base 210 may be coupled to the portion of the electronic device 100 through a magnetic material.

The second base 220 may protect another portion of the electronic device 100. The second base 220 may be coupled to the other portion of the electronic device 100. For example, the second base 220 may be detachably coupled to the second housing 120. According to an embodiment, the second base 220 may include a first surface 220a and a second surface 220b. The first surface 220a may support the second housing 120. For example, the first surface 220a may support the second rear surface 120b of the second housing 120. The second surface 220b may be opposite to the first surface 220a. For example, a direction in which the second surface 220b faces may be opposite to a direction in which the first surface 220a faces. According to an embodiment, a size of the first surface 220a and a size of the second surface 220b may be the same. For example, the size of the first surface 220a may correspond to a size of the second rear surface 120b of the second housing 120. For example, the size of the second surface 220b may correspond to the size of the second rear surface 120b of the second housing 120. According to an embodiment, the second base 220 may be coupled to the other portion of the electronic device 100 by a magnetic material included in the second base 220, but is not limited thereto. For example, the second base 220 may be coupled to the other portion of the electronic device 100 by an adhesive material included in the second base 220.

According to an embodiment, the second base 220 may be coupled to the first base 210 to be movable with respect to the first base 210. The second base 220 may be coupled to the first base 210 to be rotatable with respect to the first base 210. According to an embodiment, a state of the case 200 may be changed by a movement of the second base 220 with respect to the first base 210. The case 200 may include a first state and/or a second state.

Referring to FIG. 1A, in the first state of the case 200, a direction in which a third surface 210a of the first base 210 supporting a portion of the electronic device 100 faces may correspond to a direction in which the first surface 220a of the second base 220 faces. For example, in the first state of the case 200, the direction in which the third surface 210a of the first base 210 supporting the portion of the electronic device 100 faces may be the same as the direction in which the first surface 220a of the second base 220 faces. In the first state of the case 200, the state of the electronic device 100 may be the unfolded state. In the first state of the case 200, a portion of the first surface 220a of the second base 220 may contact a portion of the second rear surface 120b of the second housing 120. In the first state of the case 200, another portion of the first surface 220a of the second base 220 may be exposed outside the case 200. According to an embodiment, the state of the case 200 may be changeable from the first state in which the direction in which the first surface 220a faces and the direction in which the third surface 210a faces are the same, by rotation in a first rotation direction r1 of the second base 220, to the second state in which the first surface 220a and the third surface 210a face each other.

Referring to FIG. 1B, in the second state of the case 200, the third surface 210a of the first base 210 and the first surface 220a of the second base 220 may face each other. For example, in the second state of the case 200, the direction in which the third surface 210a of the first base 210 faces may be opposite to the direction in which the first surface 220a of the second base 220 faces. In the second state of the case 200, the state of the electronic device 100 may be the folded state. In the second state of the case 200, the first surface 220a of the second base 220 may contact the second rear surface 120b of the second housing 120. In the second state of the case 200, the first surface 220a of the second base 220 may be spaced apart from the hinge structure 140. According to an embodiment, the state of the case 200 may be changeable from the second state in which the first surface 220a and the third surface 210a face each other, by rotation in a second rotation direction r2 of the second base 220, to the first state in which the direction in which the first surface 220a faces and the direction in which the third surface 210a faces are the same. The second rotation direction r2 may be opposite to the first rotation direction r1.

The connecting plate 230 may be disposed between the first base 210 and the second base 220. The connecting plate 230 may connect the first base 210 and the second base 220. For example, the connecting plate 230 may extend from the first base 210 to the second base 220. For example, the connecting plate 230 may rotatably couple the second base 220 to the first base 210. According to an embodiment, in the first state of the case 200, the connecting plate 230 may contact another portion of the second rear surface 120b of the second housing 120. In the second state of the case 200, the connecting plate 230 may surround the hinge structure 140.

According to an embodiment, the first base 210 may include a sidewall 211. The sidewall 211 may surround a portion of the electronic device 100 in a state in which the case 200 and the electronic device 100 are coupled. In the state in which the case 200 and the electronic device 100 are coupled, the sidewall 211 may surround an area of the side surface of the electronic device 100. For example, in the state in which the case 200 and the electronic device 100 are coupled, the sidewall 211 may surround at least a portion of the first side surface 110c of the first housing 110. As the sidewall 211 surrounds the first housing 110, the case 200 may maintain the state in which the electronic device 100 is coupled. According to an embodiment, the sidewall 211 may be connected to the third surface 210a. For example, the sidewall 211 may be disposed on a periphery of the third surface 210a to surround the at least a portion of the first side surface 110c. For example, the sidewall 211 may extend from the periphery of the third surface 210a along the direction in which the third surface 210a faces.

According to an embodiment, the second base 220 may have a substantially planar shape so that the portion of the electronic device 100 is exposed outside the case 200. For example, the second base 220 may have a shape extending in a direction parallel to the second surface 220b so that the second side surface 120c of the second housing 120 is exposed outside of the case 200. As the second base 220 has the substantially planar shape, the second base 220 may not surround the second side surface 120c in the state in which the case 200 and the electronic device 100 are coupled. For example, a size of extent of the outer surface of the electronic device 100 may be changed according to a change in the state of the electronic device 100. For example, as the state of the electronic device 100 changes from the unfolded state to the folded state, since the hinge structure 140 is exposed outside the electronic device 100, the size of the extent of the outer surface of the electronic device 100 may increase. In the case that the second base 220 surrounds the second side surface 120c of the second housing 120 in the unfolded state of the electronic device 100, since the size of the extent of the outer surface of the electronic device 100 increases as the state of the electronic device 100 changes from the unfolded state to the folded state, stress extending the connecting plate 230 may be generated. In the case that the second base 220 surrounds the second side surface 120c in the folded state of the electronic device 100, since the size of the extent of the outer surface of the electronic device 100 decreases as the state of the electronic device 100 changes from the folded state to the unfolded state, stress for compressing the connecting plate 230 may be generated. The case 200 according to an embodiment may provide a structure capable of reducing damage to the connecting plate 230 due to the stress generated according to the change in the state of the electronic device 100 by the second base 220 having the substantially planar shape.

The electronic device 100 may provide visual information through the display 130 in the state of being coupled with the case 200. The case 200 may support the electronic device 100 in an inclined state with respect to the ground on which the electronic device 100 is mounted so that a user may conveniently view the visual information. Since the second base 220 has the planar shape, the case 200 may need a structure for supporting the second side surface 120c of the second housing 120 while supporting the electronic device 100 in the inclined state with respect to the ground. Hereinafter, a structure of the case 200 for supporting the electronic device 100 will be described.

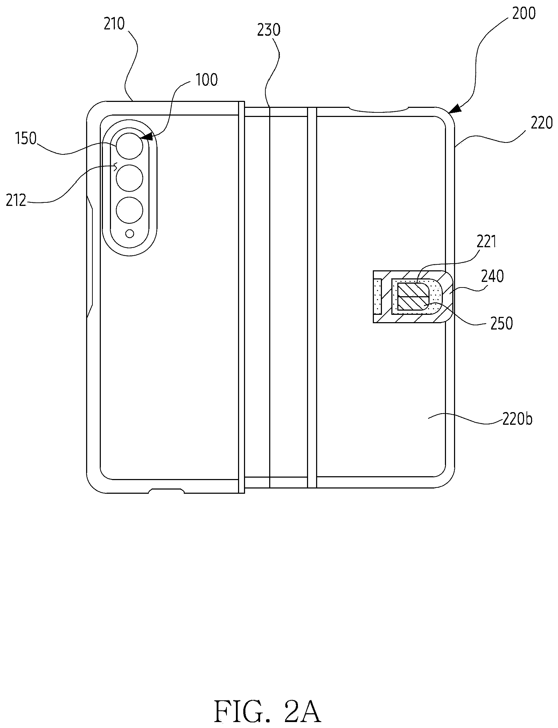

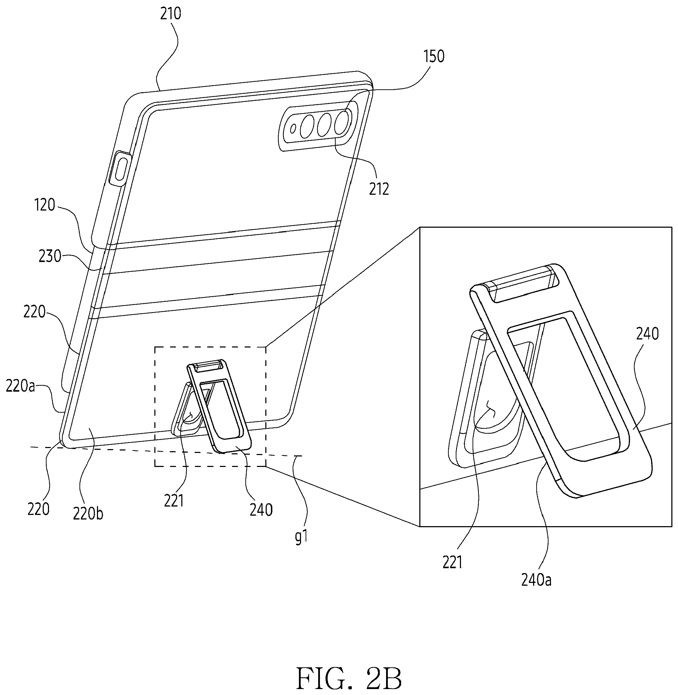

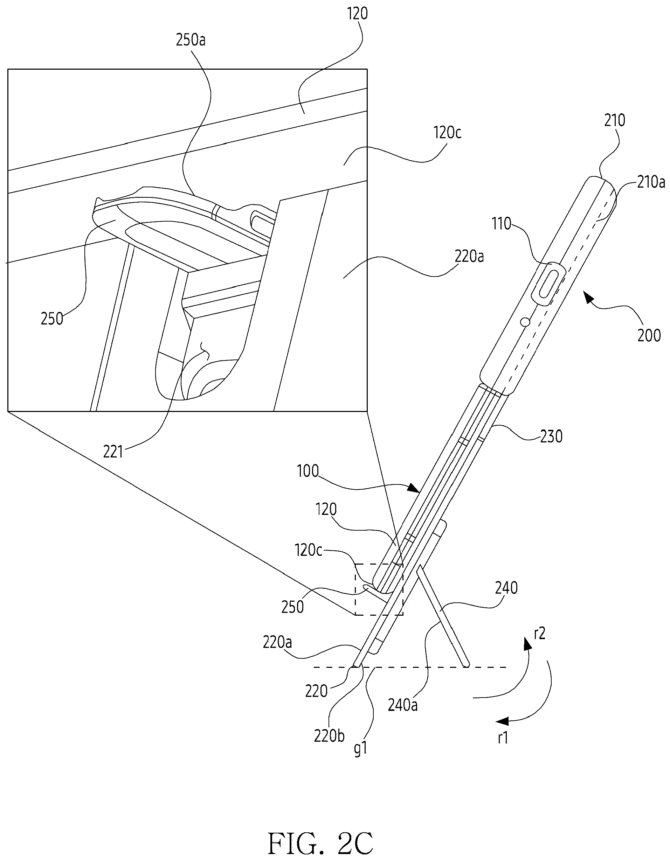

FIG. 2A is a top plan view of an exemplary case according to an embodiment, FIG. 2B is a perspective view of an exemplary case according to an embodiment, and FIG. 2C is a side view of an exemplary case according to an embodiment.

Referring to FIG. 2A, FIG. 2B, and FIG. 2C, a case 200 according to the embodiment may include a first support 240 and/or a second support 250.

According to an embodiment, a second base 220 may include a through-hole 221. The through-hole 221 may receive the second support 250. The through-hole 221 may provide a space in which the second support 250 may move. According to an embodiment, the through-hole 221 may pass through the second base 220. For example, the through-hole 221 may extend from a first surface 220a toward a second surface 220b.

The first support 240 may be rotatably coupled to the second base 220. The first support 240 may be rotatable in a first rotation direction r1 and/or a second rotation direction r2 opposite to the first rotation direction r1. As the first support 240 rotates in the first rotation direction r1, the first support 240 may approach the second surface 220b of the second base 220. As the first support 240 rotates in the second rotation direction r2 opposite to the first rotation direction r1, the first support 240 may move away from the second surface 220b of the second base 220. For example, the first support 240 may be movable to be parallel to the second surface 220b by rotation in the first rotation direction r1. For example, the first support 240 may be movable to be inclined with respect to the second surface 220b by rotation in the second rotation direction r2.

According to an embodiment, a position of the first support 240 may include a first position parallel to the second surface 220b of the second base 220, and a second position inclined with respect to the second surface 220b of the second base 220. For example, the first support 240 may be movable to be parallel to the second surface 220b or inclined to the second surface 220b in a first state of the case 200 in which a direction in which the first surface 220a faces and a direction in which a third surface 210a faces are the same. When the position of the first support 240 is the first position, the first support 240 may contact the second surface 220b of the second base 220. For example, when the position of the first support 240 is the first position, an inner surface 240a of the first support 240 may contact the second base 220. When the position of the first support 240 is the first position, the inner surface 240a of the first support 240 may face the second surface 220b of the second base 220. When the position of the first support 240 is the first position, a direction in which the inner surface 240a of the first support 240 faces may be opposite to a direction in which the second surface 220b faces. When the position of the first support 240 is the second position, the inner surface 240a of the first support 240 may be inclined with respect to the second surface 220b of the second base 220. For example, when the position of the first support 240 is the second position, the direction in which the inner surface 240a of the first support 240 faces may be inclined with respect to the direction in which the second surface 220b of the second base 220 faces. When the position of the first support 240 is the second position, the first support 240 may support the case 200 and an electronic device 100 in a state inclined with respect to the ground g1.

The second support 250 may be coupled to the second base 220 to be rotatable with respect to the second base 220. The second support 250 may be independently rotatable with respect to the first support 240. The second support 250 may be rotatable in the first rotation direction r1 and/or the second rotation direction r2 opposite to the first rotation direction r1. As the second support 250 rotates in the first rotation direction r1, the second support 250 may move away from the second surface 220b. As the second support 250 rotates in the second rotation direction r2, the second support 250 may approach the second surface 220b. For example, the second support 250 may be movable to be parallel to the second surface 220b of the second base 220 by rotation in the second rotation direction r2. The second support 250 may be movable to support a second side surface 120c of a second housing 120 disposed on the first surface 220a by rotation in the first rotation direction r1 opposite to the second rotation direction r2.

According to an embodiment, a position of the second support 250 may include a third position parallel with respect to the second surface 220b, and a fourth position supporting the second side surface 120c of the second housing 120 disposed on the first surface 220a. For example, in the first state of the case 200 in which the direction in which the first surface 220a faces and the direction of the third surface 210a faces are the same, the second support 250 may be movable to be parallel to the second surface 220b or movable to support the second side surface 120c. When the position of the second support 250 is the third position, an inner surface 250a of the second support 250 may be parallel to the second surface 220b. When the position of the second support 250 is the third position, the inner surface 250a of the second support 250 may be parallel to the first surface 220a. For example, when the position of the second support 250 is the third position, a direction in which the inner surface 250a of the second support 250 faces may be the same as the direction in which the first surface 220a faces. According to an embodiment, when the position of the second support 250 is the third position, the second support 250 may be disposed in the through-hole 221. For example, when the position of the second support 250 is the third position, the inner surface 250a of the second support 250 may be disposed in the through-hole 221. According to an embodiment, when the position of the second support 250 is the fourth position, the second support 250 may be substantially perpendicular with respect to the first surface 220a and/or the second surface 220b. When the position of the second support 250 is the fourth position, the second support 250 may face the second side surface 120c of the second housing 120. For example, when the position of the second support 250 is the fourth position, the inner surface 250a of the second support 250 may face the second side surface 120c. When the position of the second support 250 is the fourth position, the second support 250 may protrude outside the through-hole 221. For example, when the position of the second support 250 is the fourth position, at least a portion of the second support 250 may be disposed outside the through-hole 221. For example, in the case that the second support 250 does not support the second housing 120, since the second base 220 has a planar shape, the electronic device 100 may slide with respect to the case 200 by self-load. In the case that the electronic device 100 slides with respect to the case 200, it may be difficult for the electronic device 100 to stably provide visual information to a user. The case 200 according to an embodiment may provide a structure capable of reducing a movement of the electronic device 100 in a state in which the case 200 is inclined with respect to the ground g1 by the second support 250 supporting the second side surface 120c of the second housing 120.

According to an embodiment, a first base 210 may further include a camera hole 212. The camera hole 212 may pass through the first base 210. The camera hole 212 may correspond to a camera 150 of the electronic device 100. The camera 150 may be configured to obtain an image based on receiving light from the outside of the electronic device 100. For example, a distance between the first base 210 and the ground g1 may be greater than a distance between the second base 220 and the ground g1 in a state in which the first support 240 supports the electronic device 100 to be inclined with respect to the ground g1. In the case that the camera hole 212 is disposed in the second base 220, since the ground g1 and the second base 220 are close to each other, a field of view (FoV) of the camera 150 of the electronic device 100 may be narrowed. In the case that the field of view of the camera 150 is narrowed, usability of the camera 150 may be reduced. Since the camera hole 212 is disposed in the first base 210, the case 200 according to an embodiment may provide a structure capable of improving the usability of the camera 150 of the electronic device 100 in the state in which the first support 240 supports the electronic device 100 to be inclined with respect to the ground g1. For example, since the camera hole 212 is disposed far from the ground g1 in the state in which the first support 240 supports the electronic device 100 to be inclined with respect to the ground g1, the field of view of the camera 150 of the electronic device 100 may be relatively enlarged.

As described above, the case 200 according to an embodiment may provide the structure capable of reducing the movement of the electronic device 100 with respect to the case 200 in the state in which the case 200 is inclined with respect to the ground g1, by the second support 250 capable of supporting the electronic device 100. Since the camera hole 212 is disposed in the first base 210 far from the ground g1, the case 200 according to an embodiment may provide a structure capable of enlarging the field of view of the camera 150 in the state in which the case 200 is inclined with respect to the ground g1.

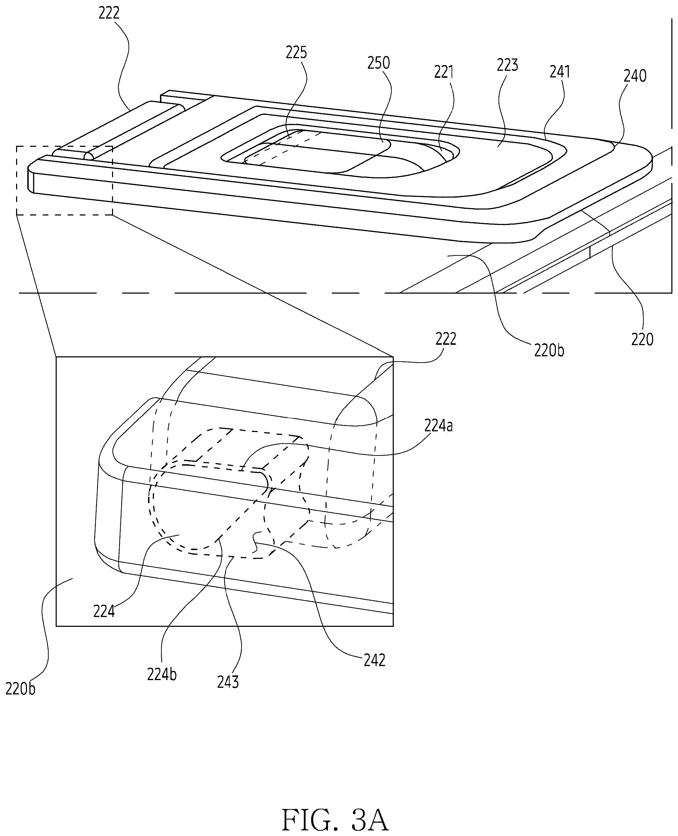

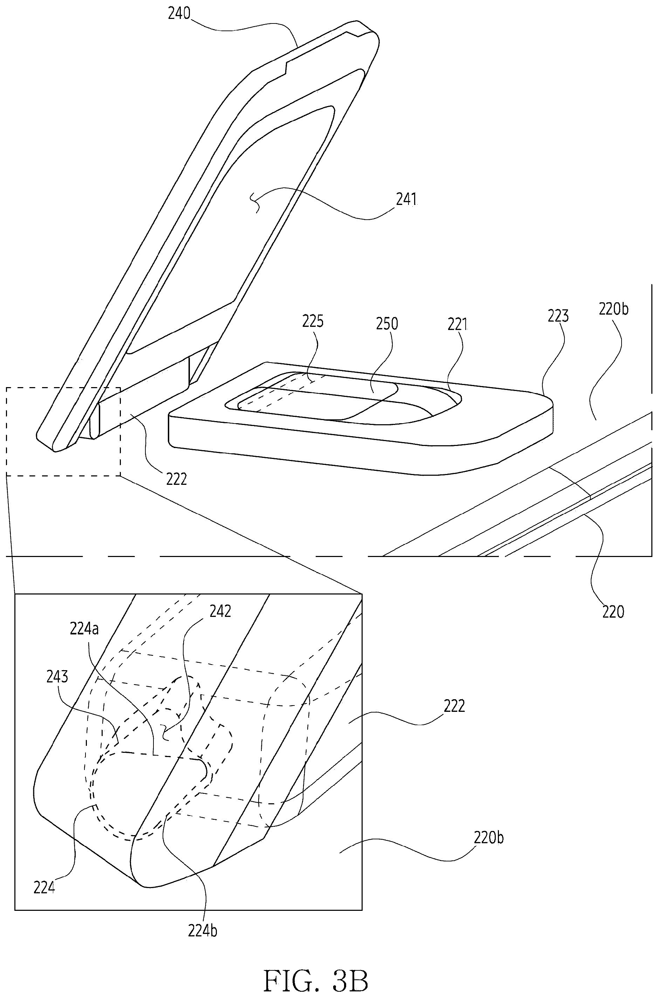

FIG. 3A illustrates an exemplary first support according to an embodiment within a first position, and FIG. 3B illustrates an exemplary first support according to an embodiment within a second position.

Referring to FIG. 3A and FIG. 3B, a second base 220 may include a first protrusion 222, a second protrusion 223, a first shaft 224, and/or a second shaft 225.

The first protrusion 222 may be disposed on a second surface 220b of the second base 220. The first protrusion 222 may protrude from the second surface 220b of the second base 220. For example, the first protrusion 222 may extend from the second surface 220b along a direction in which the second surface 220b faces. According to an embodiment, the first protrusion 222 may be coupled to the first shaft 224. As the first shaft 224 is coupled to the first protrusion 222 protruding from the second surface 220b, when a first support 240 rotates with respect to the second surface 220b, interference between the first support 240 and the second surface 220b may be reduced.

The second protrusion 223 may be disposed on the second surface 220b of the second base 220. The second protrusion 223 may protrude from the second surface 220b of the second base 220. For example, the second protrusion 223 may extend from the second surface 220b along the direction in which the second surface 220b faces. According to an embodiment, the second protrusion 223 may be spaced apart from the first protrusion 222. The second protrusion 223 may surround a through-hole 221. The second protrusion 223 may enclose the through-hole 221. As the second protrusion 223 surrounds the through-hole 221, when a position of a second support 250 is a third position, the second protrusion 223 may surround the second support 250.

According to an embodiment, when a position of the first support 240 is a first position parallel to the second surface 220b, the second protrusion 223 may be surrounded by the first support 240. For example, the first support 240 may include an opening 241 passing through the first support 240. When the position of the first support 240 is the first position, the second protrusion 223 may be received in the opening 241. When the position of the first support 240 is the first position, the second protrusion 223 may be surrounded by the first support 240 in the opening 241. When the position of the first support 240 is a second position inclined with respect to the second surface 220b, the second protrusion 223 may be disposed outside the opening 241. The second protrusion 223 may not be surrounded by the first support 240.

The first shaft 224 may provide a rotation center of the first support 240. The first support 240 may be coupled to the first shaft 224. For example, the first shaft 224 may pass through the first support 240. As the first support 240 is coupled to the first shaft 224, the first support 240 may be rotatable with respect to the second surface 220b based on the first shaft 224. According to an embodiment, the first shaft 224 may include a first cam surface 224a and a second cam surface 224b. The first cam surface 224a may be parallel to the second surface 220b of the second base 220. The second cam surface 224b may be connected to the first cam surface 224a. The second cam surface 224b may be inclined with respect to the first cam surface 224a.

According to an embodiment, the first support 240 may include a first pocket 242 and/or a first support surface 243. The first pocket 242 may provide a space in which the first support 240 is rotatable with respect to the second surface 220b. For example, the first pocket 242 may have a shape corresponding to a shape of the first shaft 224. According to an embodiment, the first pocket 242 may surround the first shaft 224. For example, the first pocket 242 may surround the first support surface 243 of the first support 240.

The first support surface 243 may define a rotation angle of the first support 240. For example, as the first support surface 243 contacts the first shaft 224, the rotation angle of the first support 240 may be defined. According to an embodiment, the first support surface 243 may have a shape corresponding to the first shaft 224. The first support surface 243 may surround the first shaft 224. At least a portion of the first support surface 243 may contact the first cam surface 224a of the first shaft 224 when the position of the first support 240 is the first position parallel to the second surface 220b. As the first support surface 243 contacts the first cam surface 224a parallel to the second surface 220b, the first support 240 may maintain a state parallel to the second surface 220b. The at least a portion of the first support surface 243 may be spaced apart from the second cam surface 224b of the first shaft 224 when the position of the first support 240 is the first position. The at least a portion of the first support surface 243 may contact the second cam surface 224b of the first shaft 224 when the position of the first support 240 is the second position inclined with respect to the second surface 220b. As the at least a portion of the first support surface 243 contacts with the second cam surface 224b inclined with respect to the second surface 220b, the first support 240 may maintain a state inclined with respect to the second surface 220b. The at least a portion of the first support surface 243 may be spaced apart from the first cam surface 224a of the first shaft 224 when the position of the first support 240 is the second position.

The second shaft 225 may provide a rotation center of the second support 250. The second support 250 may be coupled to the second shaft 225. For example, the second shaft 225 may pass through the second support 250. According to an embodiment, the second shaft 225 may pass through the second base 220. For example, the second shaft 225 may be disposed in the through-hole 221 of the second base 220.

As described above, the case 200 according to an embodiment may provide a structure capable of supporting an electronic device (e.g., the electronic device 100 of FIG. 1A and FIG. 1B) in an inclined state by the first shaft 224 defining the rotation angle of the first support 240.

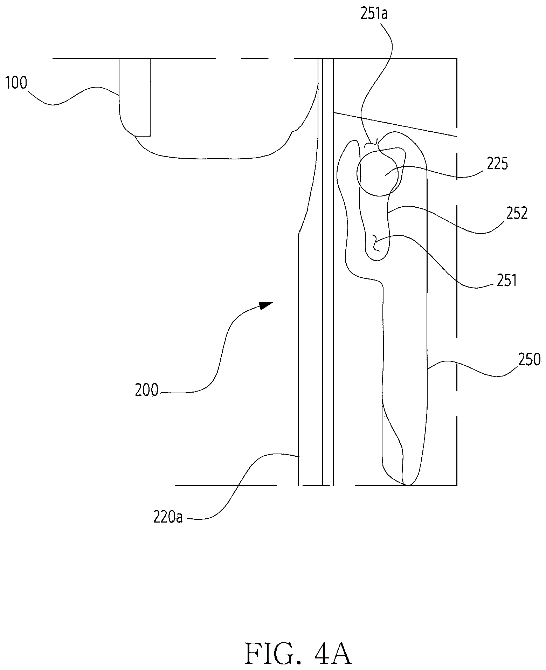

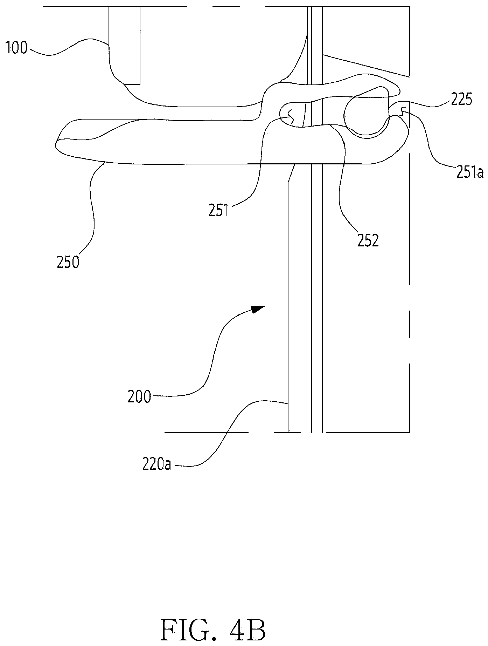

FIG. 4A illustrates an exemplary second support according to an embodiment within a third position, and FIG. 4B illustrates an exemplary second support according to an embodiment within a fourth position.

Referring to FIG. 4A and FIG. 4B, according to an embodiment, a second support 250 may include a second pocket 251 and/or a second support surface 252. The second pocket 251 may receive a second shaft 225. For example, the second pocket 251 may surround the second shaft 225. The second pocket 251 may have a shape corresponding to a shape of the second shaft 225. According to an embodiment, an end 251a of the second pocket 251 may be opened toward the outside of the second support 250. As the end 251a of the second pocket 251 is opened, the second support 250 may be coupled to the second shaft 225 through the end 251a of the second pocket 251.

The second support surface 252 may define a rotation angle of the second support 250. According to an embodiment, the second support surface 252 may surround the second pocket 251. For example, the second support surface 252 may have the shape corresponding to the shape of the second shaft 225. As the second support surface 252 has the shape corresponding to the shape of the second shaft 225, the second support surface 252 may contact at least a portion of the second shaft 225. For example, the second shaft 225 may be in close contact with the second support surface 252 by being fitted into the second pocket 251. A frictional force generated from the contact between the second support surface 252 and the second shaft 225 may maintain a position of the second support 250. When the position of the second support 250 is the third position parallel with respect to a first surface 220a, the frictional force generated from the contact between the second support surface 252 and the second shaft 225 may maintain the position of the second support 250. When the position of the second support 250 is the fourth position supporting a second side surface 120c of a second housing 120, the frictional force generated from the contact between the second support surface 252 and the second shaft 225 may maintain the position of the second support 250. For example, a size of the frictional force generated between the second support surface 252 and the second shaft 225 when the position of the second support 250 is the fourth position may be greater than when the position of the second support 250 is the third position, so that the second support 250 may support an electronic device 100.

As described above, the case 200 according to an embodiment may provide a structure capable of supporting the electronic device 100 in a state in which the case 200 is inclined with respect to the ground (e.g., the ground g1 of FIG. 2B and/or FIG. 2C) by the second shaft 225 providing the rotation center of the second support 250.

A case may include a structure capable of supporting an electronic device in a state of being coupled to the electronic device. For example, the case may include a structure capable of supporting the electronic device in an inclined state with respect to the ground. A user of the electronic device may receive content (e.g., a video) through the electronic device in a state in which the electronic device is supported by the case. In a state in which the case inclined with respect to the ground, the electronic device may move with respect to the case by self-load. In the case that the electronic device moves with respect to the case, the user may feel uncomfortable in a process of viewing the content through the electronic device. The case may need a structure capable of reducing a movement of the electronic device with respect to the case while supporting the electronic device in the state inclined with respect to the ground.

A case (e.g., the case 200 of FIG. 2A and FIG. 2B) detachably coupled to an electronic device (e.g., the electronic device 100 of FIG. 1A and FIG. 1B) according to an embodiment may comprise a first base (e.g., the first base 210 of FIG. 2A and FIG. 2B) coupled to a portion (e.g., the first housing 110 of FIG. 1A and FIG. 1B) of the electronic device. According to an embodiment, the case may comprise a second base (e.g., the second base 220 of FIG. 2A and FIG. 2B), including a first surface (e.g., the first surface 220a of FIG. 2A and FIG. 2B) facing another portion (e.g., the second housing 120 of FIG. 1A and FIG. 1B) of the electronic device and a second surface (e.g., the second surface 220b of FIG. 2A and FIG. 2B) opposite to the first surface, and coupled to the first base to be rotatable relative to the first base. According to an embodiment, the case may comprise a first support (e.g., the first support 240 of FIG. 2A and FIG. 2B), rotatably coupled to the second base, and movable to be parallel to the second surface by rotation in a first rotation direction or movable to be inclined with respect to the second surface by rotation in a second rotation direction opposite to the first rotation direction. According to an embodiment, the case may comprise a second support (e.g., the second support 250 of FIG. 2A and FIG. 2B) coupled to the second base to be independently rotatable relative to the first support, and movable to be parallel to the second surface by rotation in the second rotation direction, or movable to support a side surface (e.g., the second side surface 120c of FIG. 2A and FIG. 2B) of the electronic device disposed on the first surface by rotation in the first rotation direction. According to various embodiments, being movable may include a meaning of being rotatable. For example, a description as the first support (e.g., the first support 240 of FIG. 2A and FIG. 2B) movable to be inclined with respect to the second surface of the case (e.g., the case 200 of FIG. 2A and FIG. 2B) may include a meaning that the first support is rotatable with respect to the second surface of the case.

The case according to an embodiment may provide a structure capable of reducing a sliding of the electronic device with respect to the case in a state in which the case is inclined with respect to the ground by the second support capable of supporting the side surface of the electronic device.

According to an embodiment, the first base may include a camera hole (e.g., the camera hole 212 of FIG. 2A and FIG. 2B), passing through the first base, corresponding to a camera of the electronic device.

Since the camera hole is disposed in the first base far from the ground, in the state in which the case is inclined with respect to the ground, the case according to an embodiment may provide a structure capable of improving usability of the camera of the electronic device.

According to an embodiment, the first base may include a third surface (e.g., the third surface 210a of FIG. 2A and FIG. 2B) supporting the portion of the electronic device. According to an embodiment, a state of the case may be changeable to a first state in which the directions in which the first surface and the third surface of the second base face are the same, by rotation in the second rotation direction of the second base, and to a second state in which the first surface faces the third surface by rotation in the first rotation direction of the second base.

The case according to an embodiment may have a shape corresponding to a change in a shape of the electronic device by the first base and the second base that are rotatable with respect to each other.

According to an embodiment, the second base may include a first cam surface (e.g., the first cam surface 224a of FIG. 3A and FIG. 3B) parallel to the second surface, and a second cam surface (e.g., the second cam surface 224b of FIG. 3A and FIG. 3B) inclined with respect to the first cam surface and connected to the first cam surface, and a first shaft (e.g., the first shaft 224 of FIG. 3A and FIG. 3B) passing through the first support. According to an embodiment, the first support may include a support surface (e.g., the first support surface 243 of FIG. 3A and FIG. 3B) that has a shape corresponding to the first shaft to surround the first shaft, the support surface contacting the first cam surface when the first support is in a position parallel to the second surface and contacting the second cam surface when the first support is in an inclined position relative to the second surface.

The case according to an embodiment may provide a structure capable of supporting the electronic device in an inclined state with respect to the ground by the first cam surface and a second cam surface for defining a rotation angle of the first shaft.

According to an embodiment, the second base may include a first protrusion (e.g., the first protrusion 222 of FIG. 3A and FIG. 3B), coupled to the first shaft, protruding from the second surface.

Since the first shaft is coupled to the first protrusion protruding from the second surface, the case according to an embodiment may provide a structure in which interference of the first support and the second base is reduced.

According to an embodiment, the first support may include a first pocket (e.g., the first pocket 242 of FIG. 3A and FIG. 3B), surrounded by the support surface, configured to provide a space for movement of the first shaft.

The case according to an embodiment may provide a structure in which the first support is movable with respect to the second base by the first pocket providing the space for the movement of the first support.

According to an embodiment, the first support may include an opening (e.g., the opening 241 of FIG. 3A and FIG. 3B) passing through the first support. According to an embodiment, the second support may be surrounded by the first support within the opening in a position parallel to the second surface.

The case according to an embodiment may provide a structure capable of reducing a size of the case by the opening of the first support receiving the second support.

According to an embodiment, the second base may include a second protrusion (e.g., the second protrusion 223 of FIG. 3A and FIG. 3B), protruding from the second surface, surrounding the second support. According to an embodiment, the first support may surround the second protrusion in a position parallel to the second surface.

The case according to an embodiment may provide a structure capable of reducing the size of the case by the first support surrounding the second protrusion.

According to an embodiment, the second base may include a through-hole (e.g., the through-hole 221 of FIG. 2A and FIG. 2B), passing through the second base, receiving the second support.

The case according to an embodiment may provide a structure capable of reducing the size of the case through the through-hole receiving the second support.

According to an embodiment, the second base may include a second shaft (e.g., the second shaft 225 of FIG. 4A and FIG. 4B) passing through the second support. According to an embodiment, the second support may include a second pocket (e.g., the second pocket 251 of FIG. 4A and FIG. 4B), having a shape corresponding to a shape of the second shaft, and surrounding the second shaft.

The case according to an embodiment may provide a structure capable of supporting the side surface of the electronic device by the second support rotatable with respect to the second shaft.

According to an embodiment, an end (e.g., the end 251a of FIG. 4A and FIG. 4B) of the second pocket may be opened toward the outside of the second support.

The case according to an embodiment may provide a structure in which the second support may be assembled through the second pocket opened toward the outside of the second support.

According to an embodiment, the case may include a connecting plate (e.g., the connecting plate 230 of FIG. 1A and FIG. 1B) connecting the first base and the second base.

The case according to an embodiment may provide a structure in which the first base and the second base are rotatable with respect to each other by the connecting plate connecting the first base and the second base.

According to an embodiment, the second base may have a shape extending in a direction parallel to the second surface such that an area of the side surface of the electronic device is exposed outside the case.

Since the second base has a substantially planar shape, the case according to an embodiment may provide a structure capable of reducing damage to the connecting plate due to stress generated according to a change in the state of the electronic device.

According to an embodiment, the first base may include a third surface supporting the portion of the electronic device. According to an embodiment, the first base may include a sidewall (e.g., the sidewall 211 of FIG. 1A and FIG. 1B) disposed on a periphery of the third surface to surround an area of the side surface of the electronic device.

The case according to an embodiment may provide a structure capable of maintaining a state coupled with the electronic device by the sidewall surrounding the side surface of the electronic device.

According to an embodiment, the second support may be perpendicular to the first surface within a position supporting the side surface of the electronic device.

The case according to an embodiment may provide a structure capable of supporting the side surface of the electronic device by the second support protruding on the first surface.

A case (e.g., the case 200 of FIG. 2A and FIG. 2B) detachably coupled to an electronic device (e.g., the electronic device 100 of FIG. 1A and FIG. 1B) according to an embodiment may comprise a first base (e.g., the first base 210 of FIG. 2A and FIG. 2B) coupled to a portion (e.g., the first housing 110 of FIG. 1A and FIG. 1B) of the electronic device. According to an embodiment, the case may comprise a second base (e.g., the second base 220 of FIG. 2A and FIG. 2B), including a first surface (e.g., the first surface 220a of FIG. 2A and FIG. 2B) facing another portion (e.g., the second housing 120 of FIG. 1A and FIG. 1B) of the electronic device, a second surface (e.g., the second surface 220b of FIG. 2A and FIG. 2B) opposite to the first surface, and a through-hole (e.g., the through-hole 221 of FIG. 2A and FIG. 2B) extending from the first surface to the second surface, and coupled to the first base to be rotatable relative to the first base. According to an embodiment, the case may comprise a first support (e.g., the first support 240 of FIG. 2A and FIG. 2B), rotatably coupled to the second base, and movable to be parallel to the second surface by rotation in a first rotation direction or movable to be inclined with respect to the second surface by rotation in a second rotation direction opposite to the first rotation direction. According to an embodiment, the case may comprise a second support (e.g., the second support 250 of FIG. 2A and FIG. 2B), coupled to the second base to be independently rotatable relative to the first support, and movable to be received within the through-hole by rotation in the second rotation direction or movable to support a side surface (e.g., the second side surface 120c of FIG. 2A and FIG. 2B) of the electronic device disposed outside the through-hole by rotation in the first rotation direction.

The case according to an embodiment may provide a structure capable of reducing a sliding of the electronic device with respect to the case in a state in which the case is inclined with respect to the ground by the second support capable of supporting the side surface of the electronic device.

According to an embodiment, the first base may include a camera hole (e.g., the camera hole 212 of FIG. 2A and FIG. 2B), passing through the first base, corresponding to a camera of the electronic device.

Since the camera hole is disposed in the first base far from the ground, the case according to an embodiment may provide a structure capable of improving usability of the camera of the electronic device in the state in which the case is inclined with respect to the ground.

According to an embodiment, the first base may include a third surface (e.g., the third surface 210a of FIG. 2A and FIG. 2B) supporting the portion of the electronic device. According to an embodiment, a state of the case may be changeable to a first state in which the directions in which the first surface and the third surface of the second base face are the same, by rotation in the second rotation direction of the second base, and to a second state in which the first surface faces the third surface by rotation in the first rotation direction of the second base.

The case according to an embodiment may have a shape corresponding to a change in a shape of the electronic device by the first base and the second base that are rotatable with respect to each other.

According to an embodiment, the second base may include a second shaft (e.g., the second shaft 225 of FIG. 4A and FIG. 4B) passing through the second support. According to an embodiment, the second support may include a second pocket (e.g., the second pocket 251 of FIG. 4A and FIG. 4B), having a shape corresponding to a shape of the second shaft, surrounding the second shaft.

The case according to an embodiment may provide a structure capable of supporting the electronic device in an inclined state with respect to the ground by a first cam surface and a second cam surface for defining a rotation angle of the first shaft.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration.

## Claims

1. A case (200) detachably coupled to an electronic device (100), the case (200) comprising:
a first base (210) coupled to the electronic device (100);
a second base (220) coupled to the first base (210) to be rotatable relative to the first base (210), wherein the second base (220) includes a first surface (220a) which supports the electronic device (100) and a second surface (220b) opposite to the first surface (220a);
a first support (240) rotatably coupled to the second base (220), and movable to be parallel to the second surface (220b) by rotation in a first rotation direction (r1) or movable to be inclined with respect to the second surface (220b) by rotation in a second rotation direction (r2) opposite to the first rotation direction (r1);
a second support (250) rotatably coupled to the second base (220), and movable to be parallel to the second surface (220b) by rotation in the second rotation direction (r2) and movable to support a side surface of the electronic device (100) disposed on the first surface (220a) by rotation in the first rotation direction (r1); and
wherein a through-hole (221) is defined through the second base (220), and the second support (250) is disposed in the through-hole (221), when the second support (250) is parallel to the second surface (220b).

2. The case (200) of claim 1,
wherein a camera hole (212) is defined through the first base (210) to correspond to a camera (150) of the electronic device (100).

3. The case (200) of claim 1,
wherein the first base (210) includes a third surface (210a) which supports a portion of the electronic device (100), and
wherein a state of the case (200) is changeable to a first state in which directions in which the first surface (220a) and the third surface (210a) face are the same, by rotation in the second rotation direction (r2) of the second base (220), and to a second state in which the first surface (220a) faces the third surface (210a) by rotation in the first rotation direction (r1) of the second base (220).

4. The case (200) of claim 1,
wherein the second base (220) includes a first shaft (224) disposed through the first support (240),
wherein the first shaft (224) includes a first cam surface (224a) parallel to the second surface (220b), and a second cam surface (224b) inclined with respect to the first cam surface (224a) and connected to the first cam surface (224a), and
wherein the first support (240) includes a support surface that surrounds the first shaft (224) in a shape corresponding to the first shaft (224), the support surface contacting the first cam surface (224a) when the first support (240) is in a position parallel to the second surface (220b) and contacting the second cam surface (224b) when the first support (240) is in an inclined position relative to the second surface (220b).

5. The case (200) of claim 4,
wherein the second base (220) further includes a first protrusion (222) coupled to the first shaft (224) and protruding from the second surface (220b).

6. The case (200) of claim 4,
wherein the first support (240) further includes a first pocket (242) surrounded by the support surface and configured to provide a space for movement of the first shaft (224).

7. The case (200) of claim 1,
wherein an opening (241) is defined through the first support (240), and
wherein the second support (250) is surrounded by the first support (240) within the opening (241) in a position parallel to the second surface (220b).

8. The case (200) of claim 1,
wherein the second base (220) further includes a second protrusion (223) protruding from the second surface (220b) and surrounding the second support (250), and
wherein the first support (240) surrounds the second protrusion (223) in a position parallel to the second surface (220b).

9. The case (200) of claim 1,
wherein the second base (220) further includes a second shaft (225) disposed through the second support (250), and
wherein the second support (250) includes a second pocket (251) having a shape corresponding to a shape of the second shaft (225) and surrounding the second shaft (225).

10. The case (200) of claim 9,
wherein an end (251a) of the second pocket (251) is opened toward an outside of the second support (250).

11. The case (200) of claim 1, further including a connecting plate (230) connected between the first base (210) and the second base (220).

12. The case (200) of claim 1,
wherein the second base (220) has a shape extending in a direction parallel to the second surface (220b) such that an area of the side surface of the electronic device (100) is exposed outside the case (200).

13. The case (200) of claim 1,
wherein the first base (210) includes:
a third surface (210a) which supports a portion of the electronic device (100); and
a sidewall (211) disposed on a periphery of the third surface (210a) to surround an area of the side surface of the electronic device (100).

14. The case (200) of claim 1,
wherein the second support (250) is perpendicular to the first surface (220a) in a position in which the second support (250) supports the side surface of the electronic device (100).

## Patentansprüche

1. Gehäuse (200), das abnehmbar mit einer elektronischen Vorrichtung (100) gekoppelt ist, wobei das Gehäuse (200) Folgendes umfasst:
eine erste Basis (210), die mit der elektronischen Vorrichtung (100) gekoppelt ist;
eine zweite Basis (220), die mit der ersten Basis (210) gekoppelt ist, sodass sie relativ zur ersten Basis (210) drehbar ist, wobei die zweite Basis (220) eine erste Fläche (220a), die die elektronische Vorrichtung (100) trägt, und eine zweite Fläche (220b), die der ersten Fläche (220a) gegenüberliegt, beinhaltet;
einen ersten Träger (240), der drehbar mit der zweiten Basis (220) gekoppelt ist, und der durch Drehung in einer ersten Drehrichtung (r1) bewegbar ist, um parallel zur zweiten Fläche (220b) zu sein, oder durch Drehung in einer zweiten Drehrichtung (r2), die der ersten Drehrichtung (r1) entgegengesetzt ist, bewegbar ist, um in Bezug auf die zweite Fläche (220b) geneigt zu sein;
einen zweiten Träger (250), der drehbar mit der zweiten Basis (220) gekoppelt ist, und der durch Drehung in der zweiten Drehrichtung (r2) bewegbar ist, um parallel zur zweiten Fläche (220b) zu sein, und durch Drehung in der ersten Drehrichtung (r1) bewegbar ist, um eine Seitenfläche der elektronischen Vorrichtung (100), die auf der ersten Fläche (220a) angeordnet ist, zu tragen; und
wobei ein Durchgangsloch (221) durch die zweite Basis (220) definiert ist und der zweite Träger (250) in dem Durchgangsloch (221) angeordnet ist, wenn der zweite Träger (250) parallel zur zweiten Fläche (220b) ist.

2. Gehäuse (200) nach Anspruch 1,
wobei eine Kameraöffnung (212) durch die erste Basis (210) definiert ist, um einer Kamera (150) der elektronischen Vorrichtung (100) zu entsprechen.

3. Gehäuse (200) nach Anspruch 1,
wobei die erste Basis (210) eine dritte Fläche (210a) beinhaltet, die einen Abschnitt der elektronischen Vorrichtung (100) trägt, und
wobei ein Zustand des Gehäuses (200) durch Drehung der zweiten Basis (220) in der zweiten Drehrichtung (r2) in einen ersten Zustand, in dem Richtungen, in die die erste Fläche (220a) und die dritte Fläche (210a) gewandt sind, identisch sind, und durch Drehung der zweiten Basis (220) in der ersten Drehrichtung (r1) in einen zweiten Zustand, in dem die erste Fläche (220a) der dritten Fläche (210a) zugewandt ist, überführbar ist.

4. Gehäuse (200) nach Anspruch 1,
wobei die zweite Basis (220) eine erste Welle (224) beinhaltet, die durch den ersten Träger (240) verläuft,
wobei die erste Welle (224) eine erste Nockenfläche (224a), die parallel zur zweiten Fläche (220b) ist, sowie eine zweite Nockenfläche (224b), die in Bezug auf die erste Nockenfläche (224a) geneigt ist und mit der ersten Nockenfläche (224a) verbunden ist, beinhaltet und
wobei der erste Träger (240) eine Tragfläche beinhaltet, die die erste Welle (224) in einer Form, die der ersten Welle (224) entspricht, umgibt, wobei die Tragfläche die erste Nockenfläche (224a) berührt, wenn sich der erste Träger (240) in einer zur zweiten Fläche (220b) parallelen Position befindet, und die zweite Nockenfläche (224b) berührt, wenn sich der erste Träger (240) in einer relativ zur zweiten Fläche (220b) geneigten Position befindet.

5. Gehäuse (200) nach Anspruch 4,
wobei die zweite Basis (220) ferner einen ersten Vorsprung (222) beinhaltet, der mit der ersten Welle (224) gekoppelt ist und von der zweiten Fläche (220b) hervorsteht.

6. Gehäuse (200) nach Anspruch 4,
wobei der erste Träger (240) ferner eine erste Aussparung (242) beinhaltet, die von der Tragfläche umgeben ist und konfiguriert ist, um einen Raum für eine Bewegung der ersten Welle (224) bereitzustellen.

7. Gehäuse (200) nach Anspruch 1,
wobei eine Öffnung (241) durch den ersten Träger (240) definiert ist, und
wobei der zweite Träger (250) innerhalb der Öffnung (241) in einer Position, die parallel zur zweiten Fläche (220b) ist, von dem ersten Träger (240) umgeben ist.

8. Gehäuse (200) nach Anspruch 1,
wobei die zweite Basis (220) ferner einen zweiten Vorsprung (223) beinhaltet, der von der zweiten Fläche (220b) hervorsteht und den zweiten Träger (250) umgibt, und
wobei der erste Träger (240) in einer Position, die parallel zur zweiten Fläche (220b) ist, den zweiten Vorsprung (223) umgibt.

9. Gehäuse (200) nach Anspruch 1,
wobei die zweite Basis (220) ferner eine zweite Welle (225) beinhaltet, die durch den zweiten Träger (250) verläuft, und
wobei der zweite Träger (250) eine zweite Aussparung (251) beinhaltet, die eine Form aufweist, die einer Form der zweiten Welle (225) entspricht und die zweite Welle(225) umgibt.

10. Gehäuse (200) nach Anspruch 9,
wobei ein Ende (251a) der zweiten Aussparung (251) zu einer Außenseite des zweiten Trägers (250) hin geöffnet ist.

11. Gehäuse (200) nach Anspruch 1, das ferner eine Verbindungsplatte (230), die zwischen der ersten Basis (210) und der zweiten Basis (220) verbunden ist, beinhaltet.

12. Gehäuse (200) nach Anspruch 1,
wobei die zweite Basis (220) eine Form aufweist, die sich in einer Richtung parallel zur zweiten Fläche (220b) erstreckt, sodass ein Bereich der Seitenfläche der elektronischen Vorrichtung (100) außerhalb des Gehäuses (200) freiliegt.

13. Gehäuse (200) nach Anspruch 1,
wobei die erste Basis (210) Folgendes beinhaltet:
eine dritte Fläche (210a), die einen Abschnitt der elektronischen Vorrichtung (100) trägt; und
eine Seitenwand (211), die an einem Umfang der dritten Fläche (210a) angeordnet ist, um einen Bereich der Seitenfläche der elektronischen Vorrichtung (100) zu umgeben.

14. Gehäuse (200) nach Anspruch 1,
wobei der zweite Träger (250) in einer Position, in der der zweite Träger (250) die Seitenfläche der elektronischen Vorrichtung (100) trägt, senkrecht zur ersten Fläche (220a) ist.

## Revendications

1. Boîtier (200) couplé de manière amovible à un dispositif électronique (100), le boîtier (200) comprenant :
une première base (210) couplée au dispositif électronique (100) ;
une deuxième base (220) couplée à la première base (210) de manière à pouvoir tourner par rapport à la première base (210), la deuxième base (220) comprenant une première surface (220a) qui prend en charge le dispositif électronique (100) et une deuxième surface (220b) opposée à la première surface (220a) ;
un premier support (240) couplé de manière rotative à la deuxième base (220), et pouvant être déplacé pour devenir parallèle à la deuxième surface (220b) par rotation dans un premier sens de rotation (r1), ou pouvant être déplacé pour devenir incliné par rapport à la deuxième surface (220b) par rotation dans un deuxième sens de rotation (r2) opposé au premier sens de rotation (r1) ;
un deuxième support (250) couplé de manière rotative à la deuxième base (220), et pouvant être déplacé pour devenir parallèle à la deuxième surface (220b) par rotation dans le deuxième sens de rotation (r2), et pouvant être déplacé pour prendre en charge une surface latérale du dispositif électronique (100) disposé sur la première surface (220a) par rotation dans le premier sens de rotation (r1) ; et
dans lequel un trou traversant (221) est formé à travers la deuxième base (220), et le deuxième support (250) est disposé dans le trou traversant (221), lorsque le deuxième support (250) est parallèle à la deuxième surface (220b).

2. Boîtier (200) de la revendication 1,
dans lequel un trou de caméra (212) est formé à travers la première base (210) de manière à correspondre à une caméra (150) du dispositif électronique (100).

3. Boîtier (200) de la revendication 1,
dans lequel la première base (210) comprend une troisième surface (210a) qui prend en charge une partie du dispositif électronique (100), et
dans lequel un état du boîtier (200) peut être modifié pour passer à un premier état dans lequel les directions vers lesquelles la première surface (220a) et la troisième surface (210a) font face sont identiques, par rotation de la deuxième base (220) dans le deuxième sens de rotation (r2), et à un second état dans lequel la première surface (220a) fait face à la troisième surface (210a) par rotation dans le premier sens de rotation (r1) de la deuxième base (220).

4. Boîtier (200) de la revendication 1,
dans lequel la deuxième base (220) comprend un premier arbre (224) disposé à travers le premier support (240),
dans lequel le premier arbre (224) comprend une première surface de came (224a) parallèle à la deuxième surface (220b), et une deuxième surface de came (224b) inclinée par rapport à la première surface de came (224a) et reliée à la première surface de came (224a), et
dans lequel le premier support (240) comprend une surface de support qui entoure le premier arbre (224) selon une forme correspondant à celle du premier arbre (224), la surface de support étant en contact avec la première surface de came (224a) lorsque le premier support (240) se trouve dans une position parallèle à la deuxième surface (220b) et étant en contact avec la deuxième surface de came (224b) lorsque le premier support (240) se trouve dans une position inclinée par rapport à la deuxième surface (220b).

5. Boîtier (200) de la revendication 4,
dans lequel la deuxième base (220) comprend en outre une première saillie (222) couplée au premier arbre (224) et faisant saillie à partir de la deuxième surface (220b).

6. Boîtier (200) de la revendication 4,
dans lequel le premier support (240) comprend en outre une première poche (242) entourée par la surface de support et configurée pour fournir un espace permettant le déplacement du premier arbre (224).

7. Boîtier (200) de la revendication 1,
dans lequel une ouverture (241) est formée à travers le premier support (240), et
dans lequel le deuxième support (250) est entouré par le premier support (240) à l'intérieur de l'ouverture (241), dans une position parallèle à la deuxième surface (220b).

8. Boîtier (200) de la revendication 1,
dans lequel la deuxième base (220) comprend en outre une deuxième saillie (223) faisant saillie à partir de la deuxième surface (220b) et entourant le deuxième support (250), et
dans lequel le premier support (240) entoure la deuxième saillie (223) dans une position parallèle à la deuxième surface (220b).

9. Boîtier (200) de la revendication 1,
dans lequel la deuxième base (220) comprend en outre un deuxième arbre (225) disposé à travers le deuxième support (250), et
dans lequel le deuxième support (250) comprend une deuxième poche (251) dont la forme correspond à une forme du deuxième arbre (225) et qui entoure le deuxième arbre (225).

10. Boîtier (200) de la revendication 9,
dans lequel une extrémité (251a) de la deuxième poche (251) est ouverte vers un extérieur du deuxième support (250).

11. Boîtier (200) de la revendication 1, comprenant en outre une plaque de liaison (230) reliée entre la première base (210) et la deuxième base (220).

12. Boîtier (200) de la revendication 1,
dans lequel la deuxième base (220) présente une forme s'étendant dans une direction parallèle à la deuxième surface (220b), de telle sorte qu'une zone de la surface latérale du dispositif électronique (100) soit exposée à l'extérieur du boîtier (200).

13. Boîtier (200) de la revendication 1,
dans lequel la première base (210) comprend :
une troisième surface (210a) qui prend en charge une partie du dispositif électronique (100) ; et
une paroi latérale (211) disposée sur une périphérie de la troisième surface (210a) de manière à entourer une zone de la surface latérale du dispositif électronique (100).

14. Boîtier (200) de la revendication 1,
dans lequel le deuxième support (250) est perpendiculaire à la première surface (220a) dans une position dans laquelle le deuxième support (250) prend en charge la surface latérale du dispositif électronique (100).
